Europäisches Patentamt

European Patent Office

Office européen des brevets

(19)

(11) Veröffentlichungsnummer : **0 134 309**
**B1**

(12) # EUROPÄISCHE PATENTSCHRIFT

(45) Veröffentlichungstag der Patentschrift :
28.05.86

(51) Int. Cl.⁴ : **B 60 C 27/16**

(21) Anmeldenummer : 83112291.6

(22) Anmeldetag : 07.12.83

(54) **Gleitschutzvorrichtung, insbesondere für luftbereifte Fahrzeugräder auf Eis- und Schneeflächen.**

(30) Priorität : 03.09.83 DE 3331855
23.09.83 DEU 8327385

(43) Veröffentlichungstag der Anmeldung :
20.03.85 Patentblatt 85/12

(45) Bekanntmachung des Hinweises auf die Patenterteilung : 28.05.86 Patentblatt 86/22

(84) Benannte Vertragsstaaten :
AT BE CH DE FR GB IT LI NL SE

(56) Entgegenhaltungen :
EP-A- 0 056 130
DE-A- 2 213 395
FR-A- 1 368 348
US-A- 2 517 634

(73) Patentinhaber : **Niveau AG**
**Gartenstrasse 85**
**CH-4002 Basel (CH)**

(72) Erfinder : **Preusker, Werner**
**Kleine-Nister-Strasse 15**
**D-5239 Atzelgift (DE)**

(74) Vertreter : **Richter, Joachim, Dipl.-Ing. et al**
**Patentanwälte Richter u.Werdermann Neuer Wall 10**
**D-2000 Hamburg 36 (DE)**

EP 0 134 309 B1

## Beschreibung

Die Erfindung betrifft eine Gleitschutzvorrichtung, insbesondere für luftbereifte Fahrzeugräder auf Eis- und Schneeflächen, die aus einer an der Radscheibe bzw. Felge befestigbaren Tragscheibe mit einer Anzahl von in gleichem Abstand voneinander radial verlaufenden Gleitschutzarmen aus einem vorgebogenen, die Reifenlauffläche übergreifenden und außenseitig an ihren freien Enden ein Greifprofil oder Spikes tragenden Profil aus einem Kunststoff oder einem anderen geeigneten Werkstoff besteht, wobei die Gleitschutzarme an einer mit einer mittigen Durchbrechung versehenen Tragscheibe um parallel zur Radscheibenlagerachse verlaufende Achsen in einem kleinen Bereich verschwenkbar angeordnet sind und zur Befestigung der Tragscheibe an der Radscheibe bzw. Felge eine kreisförmige Befestigungsscheibe mit einer Anzahl von Durchbrechungen für die Felgenschrauben, Radbolzen od. dgl. vorgesehen ist. Eine derartige Gleitschutzvorrichtung ist aus der EP-A-56 130 bekannt.

Für das Fahren mit Kraftfahrzeugen im Winter auf schneebedeckten Steigungen und über Gefällstrecken werden neben Schneeketten auch Winterreifen, sogenannte Haftreifen, verwendet. Schneeketten sind wenig beliebt, da ihr Aufziehen auf die Fahrzeugreifen oftmals mühevoll ist und sie so gefahren werden müssen, daß die Fahrbahn nicht beschädigt wird, d. h., daß auf nach schnee- oder eisbedeckten Straßenabschnitten folgenden trockenen Fahrbahnabschnitten die Schneeketten abzunehmen sind, zumal die Schneeketten beim Fahren auf trockenen Fahrbahnen einem hohen Verschleiß unterworfen sind und darüber hinaus keine hohe Geschwindigkeit zulassen. Insbesondere auf kurzfristig mit eisbedeckten Straßen, z. B. bei durch auf gefrorene Fahrbahndecken auffallendem sprühregen erzeugten Eisflächen, stehen Schneeketten und Haftreifen oft nicht zur Verfügung. Auch die mit Spikes versehenen Reifen sind nicht immer anwendbar.

Neben Schneekette und Haftreifen sind Anfahrhilfen bekannt, die jedoch keinen Ersatz für Schneeketten und Haftreifen darstellen. Diese Anfahrhilfen, die aus auf den Reifen aufgesetzten Klemmbügeln bestehen, dienen lediglich dazu, ein Fahrzeug aus Morast oder Schnee ein kurzes Stück herauszufahren.

Die Erfindung löst die Aufgabe, eine Befestigungseinrichtung für Gleitschutzvorrichtungen der gattungsgemäßen Art zu schaffen, die ständig an den Rädern eines Fahrzeuges in Bereitschaft zur Aufnahme der eigentlichen Gleitschutzvorrichtung mit den Gleitschutzarmen verbleiben kann, die ein müheloses Anbringen und Abnehmen der eigentlichen Gleitschutzvorrichtung ermöglicht, ohne daß es hierzu eines Verfahrens des Fahrzeuges bedarf und die sich den Walkbewegungen des Fahrzeugreifens anpaßt. Außerdem soll eine Gleitschutzvorrichtung geschaffen werden, die ständig an den Rädern des Fahrzeuges in Bereitschaft zur Aufnahme der eigentlichen Gleitschutzvorrichtung mit den Gleitschutzarmen gehalten wird.

Zur Lösung dieser Aufgabe wird eine Gleitschutzvorrichtung gemäß der eingangs beschriebenen Art vorgeschlagen, die erfindungsgemäß in der Weise ausgebildet ist, daß

a) die Befestigungsscheibe mit Schrauben mit der Felge befestigt ist,

b) die Befestigungsscheibe zentrisch eine kreisförmige, gegenüber dem Durchmesser der Befestigungsscheibe einen kleineren Durchmesser aufweisende Nabe trägt, die in einem Abstand von der Befestigungsscheibe benachbart zu ihrem oberen Rand an ihrem Umfang eine Anzahl von wulstartigen Ansätzen mit unterhalb diesen ausgebildeten, sich konisch von Einführöffnungen verjüngenden in Nabenumfangrichtung verlaufenden Gleit- und Führungsbahnen aufweist und die die die Nabe umschließende Tragscheibe mit den Gleitschutzarmen trägt, die mittels eines auf die Nabe aufgesetzten Sicherungsringes gesichert ist, der in die Gleit- und Führungsbahnen an der Nabe einführbare, eine bajonettartige Verriegelung bewirkende Verriegelunsstege mit sich zu den Einführöffnungen hin erstreckenden, konisch sich verjüngenden Abschnitten und an seiner Innenwandfläche mindestens einen blattfederartigen Schnäpper aufweist, der in verriegelter Stellung des Sicherungsringes an der Befestigungsscheibe in eine Ausnehmung am Umfang der Nabe eingreift und sich an einem Anschlag gegen ungewolltes Entriegeln abstützt und mittels eines Entriegelungsschlüssels aus der Verriegelungsstellung in eine Entriegelungsstellung überführbar ist,

c) die Tragscheibe mit den Gleitschutzarmen mit Spiel auf der Nabe der Befestigungsscheibe zur Durchführung exzentrischer Umlaufbewegungen angeordnet ist.

Mit einer derart ausgebildeten Befestigungseinrichtung ist die Montage einer Gleitschutzvorrichtung, bestehend aus einer Tragscheibe mit einer Anzahl von Gleitschutzarmen, mühelos und in keiner Weise kraftaufwendig. Da die Befestigungseinrichtung, bestehend aus der Befestigungsscheibe und dem Sicherungsring, an der Radfelge verbleibt, braucht zum Aufsetzen der Tragscheibe mit den Gleitschutzarmen lediglich der Sicherungsring von der an der Radfelge befestigten Befestigungsscheibe gelöst zu werden. Hierauf erfolgt dann das Aufsetzen der Tragscheibe auf die Nabe der Befestigungsscheibe. Mittels des dann aufgesetzten Sicherungsringes wird die Tragscheibe auf der Befestigungsscheibe derart verriegelt, daß die Tragscheibe mit Spiel auf der Nabe der Bestigungsscheibe und zwischen der Befestigungsscheibe und dem Sicherungsring gehalten ist. Aufgrund der bajonettartigen Verriegelung zwischen der Befestigungsscheibe und dem Sicherungsring ist die Gleitschutzvorrichtung, bestehend aus der Tragscheibe mit den Gleitschutzarmen, sicher gehalten. Das Lösen der Verriegelung erfolgt mittels eines Entriegelungsschlüssels, der zwei Abwinkelungen aufweist, mittels denen die blattfederartigen Schnäpper aus ihrer Verriegelungsstellung herausbewegt werden. Die Befestigungsscheibe mit der Nabe und dem aufgesetzten Sicherungsring kann ständig an der Radfelge eines Fahrzeuges verbleiben, während die eigentliche Gleitschutzvorrichtung bei Bedarf angelegt wird.

Besonders vorteilhaft ist dabei die Ausgestaltung, nach der die Tragscheibe mit den Gleitschutzarmen mit Spiel auf der Nabe der Befestigungsscheibe angeordnet ist. Dadurch, daß die Tragscheibe mit einem relativ großen Spiel auf der Nabe der Befestigungsscheibe gehalten ist, ist die Tragscheibe in der Lage, exzentrische Bewegungen durchzuführen, denn die Tragscheibe mit den Gleitschutzarmen muß während des Betriebes der Gleitschutzvorrichtung die Walkbewegungen des Reifens mit nachvollziehen und darf daher nicht fest bzw. starr an der Felge angeordnet sein. Dadurch, daß die Tragscheibe mit Spiel auf der Nabe der Befestigungsscheibe gehalten ist, kann die Tragscheibe in Anpassung an die Walkbewegungen des Reifens Taumelbewegungen durchführen. Auf diese Weise wird gewährleistet, daß die Gleitschutzarme der Gleitschutzvorrichtung im Betriebszustand immer eine Stellung einnehmen, in der die Gleitschutzarme an der Seitenwandfläche des Reifens anliegen und die Reifenlauffläche übergreifen.

Eine weitere vorteilhafte Ausgestaltung der Erfindung besteht darin, daß die Gleitschtzvorrichtung zur Befestigung der Tragscheibe eine mit der Radscheibe bzw. Felge verbundene Befestigungsscheibe aufweist, die mit verriegelbaren Halterungen für die Tragscheibe versehen ist, wobei die Befestigungsscheibe unlösbar mit der Radscheibe bzw. Felge verbunden ist und einen Bestandteil des Rades bildet. Da die Befestigungsscheibe und der Sicherungsring bei dieser Ausführungsform an der Radfelge verbleibt, braucht zum Aufsetzen der Tragscheibe mit den Gleitschutzarmen lediglich der Sicherungsring von der mit der Radfelge verbundenen Befestigungsscheibe gelöst zu werden. Hierauf erfolgt dann das Aufsetzen der Tragscheibe auf die Nabe der Befestigungsscheibe. Mittels des dann aufgesetzten Sicherungsringes wird die Tragscheibe auf der Befestigungsscheibe derart verriegelt, daß die Tragscheibe mit Spiel auf der Nabe der Befestigungsscheibe und zwischen der Befestigungsscheibe und dem Sicherungsring gehalten ist.

Vorteilhafte Weiterbildungen der Erfindung sind in den Unteransprüchen beschrieben.

Im folgenden wird der Gegenstand der Erfindung in den Zeichnungen erläutert. Es zeigt

Figur 1 als teilweise senkrechter Schnitt ein Kraftfahrzeugrad mit die Reifenlauffläche übergreifenden Gleitschutzarmen einer Gleitschutzvorrichtung,

Figur 2 in einer Ansicht von oben einen Abschnitt der die Gleitschutzarme tragenden Tragscheibe der Gleitschutzvorrichtung,

Figur 3 in einer Ansicht von oben die Befestigungsscheibe mit Nabe der Befestigungseinrichtung für die Gleitschutzvorrichtung,

Figur 4 einen senkrechten Schnitt der Befestigungsscheibe,

Figur 5 eine Seitenansicht der Befestigungsscheibe,

Figur 6 einen Verschlußbereich an der Befestigungsscheibe,

Figur 7 in einer Ansicht von oben den Sicherungsring der Befestigungseinrichtung für die Gleitschutzvorrichtung,

Figur 8 in einer Ansicht von oben einen Entriegelungsschlüssel und

Figur 9 in einer Vorderansicht den Entriegelungsschlüssel.

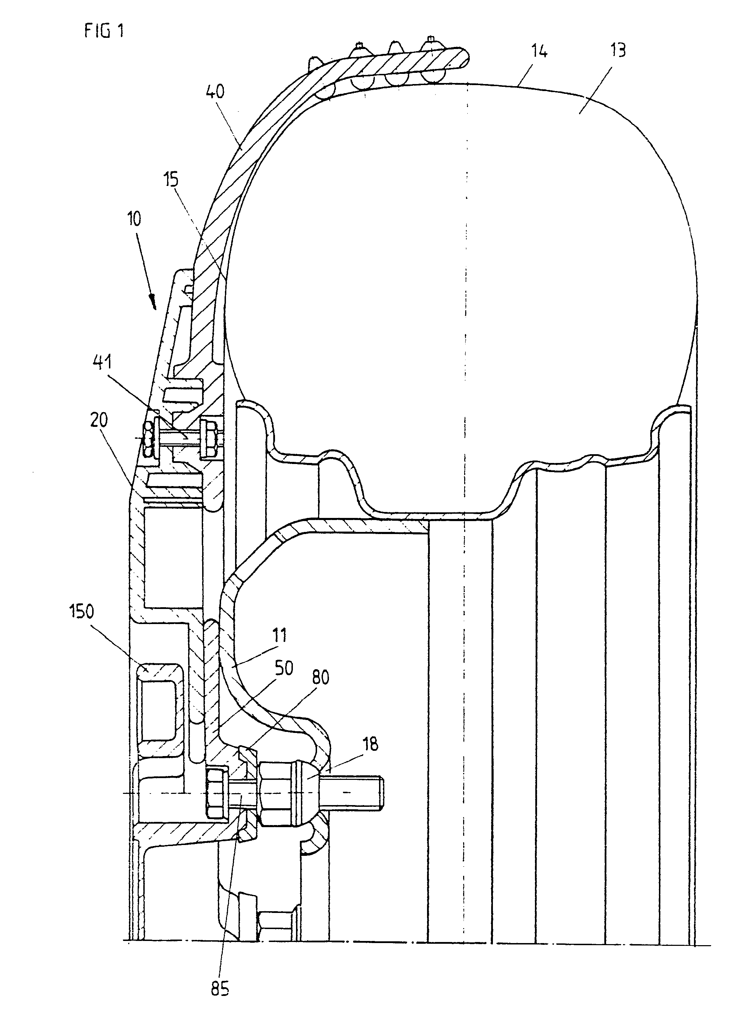

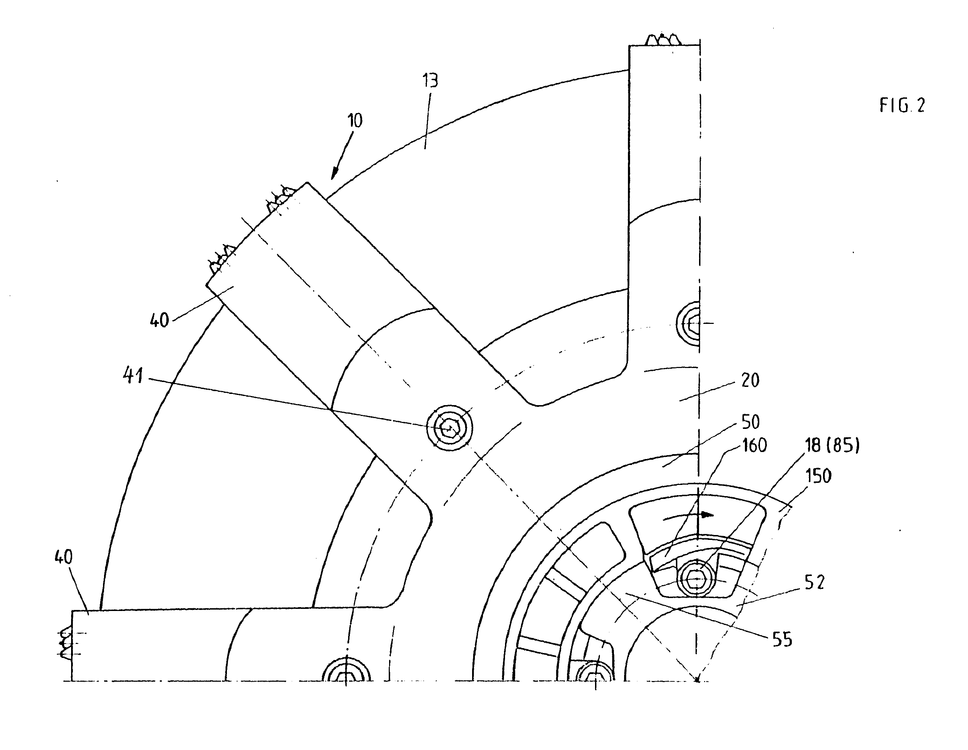

Wie Fig. 1 und 2 zeigen, besteht die Gleitschutzvorrichtung 10 aus einer mit einer mittigen Durchbrechung versehenen, d. h. ringförmigen Tragscheibe 20, an der eine Anzahl radial verlaufender Gleitschutzarme 40 befestigt sind, die im gleichen Abstand voneinander angeordnet und um parallel zur Radscheibenlagerachse verlaufenden Achsen 41 in einem kleinen Bereich verschwenkbar sind. Diese Verschwenkbarkeit der Gleitschutzarme in einem kleinen Bereich ermöglicht es, bei stehendem Fahrzeug die Gleitschutzvorrichtung anbringen zu können. Bei den ersten Umdrehungen des Fahrzeugrades stellen sich die Gleitschutzarme 40 alle in einem gleichen Abstand zueinander auf, auch wenn während der Montage im Bereich der Reifenauflagefläche auf einem Untergrund, wie Straße od. dgl., die Gleitschutzarme seitlich zur Reifenauflagefläche zu liegen kommen.

Die Gleitschutzvorrichtung ist an dem mit einem Reifen 13 versehenen Rad, welches gleichzeitig die Felge darstellt, befestigt. Das Rad 11 ist mit einem in der Zeichnung nicht dargestellten Bremsteil versehen. Der Lauffächenbereich des Reifens 13 ist mit 14 und die Außenseitenfläche des Reifens mit 15 bezeichnet (Fig. 1).

Die Befestigung eines jeden Gleitschutzarmes 40 an der Tragscheibe 20 erfolgt mittels bolzen- oder nietartiger Verbindungsmittel, wobei auch eine lösbare Befestigung der Gleitschutzarme 40 an der Tragscheibe 20 möglich ist, um verschlissene Gleitschutzarme 40 austauschen zu können. Wie Fig. 2 zeigt, sind an der Tragscheibe 20 acht Gleitschutzarme 40 vorgesehen. Die Anzahl der Gleitschutzarme kann beliebig gewählt sein. Es müssen jedoch mindestens zwei Gleitschutzarme vorhanden sein. Alle Gleitschutzarme sind im gleichen Winkelabstand voneinander angeordnet.

Jeder Gleitschutzarm 40 besteht aus federndelastischem Werkstoff, wie beispielsweise Federstahl, so daß ein elastisches Abbiegen des freien Endabschnittes eines jeden Gleitschutzarmes 40 in den Bereich der Lauffläche 14 des Reifens 13 möglich ist. Die Gleitschutzarme 40 sind derart vorgeformt, daß nach dem Ansetzen der Gleitschutzvorrichtung 10 an einem Fahrzeugrad die Gleitschutzarme mit ihren freien Enden die Reifenlauffläche 14 übergreifen. Anstelle von Federstahl können für die Herstellung der Gleitschutzarme 40 auch andere geeignete Werkstoffe Verwendung finden. So können die Gleitschutzarme 40 auch aus entsprechend geeigneten Kunststoffen bestehen.

An den freien Enden weisen die Gleitschutzarme 40 außenseitig Greifprofile auf, so daß eine hohe Griffigkeit erreichbar ist. Diese Greifprofile können auch als Spikes ausgebildet sein.

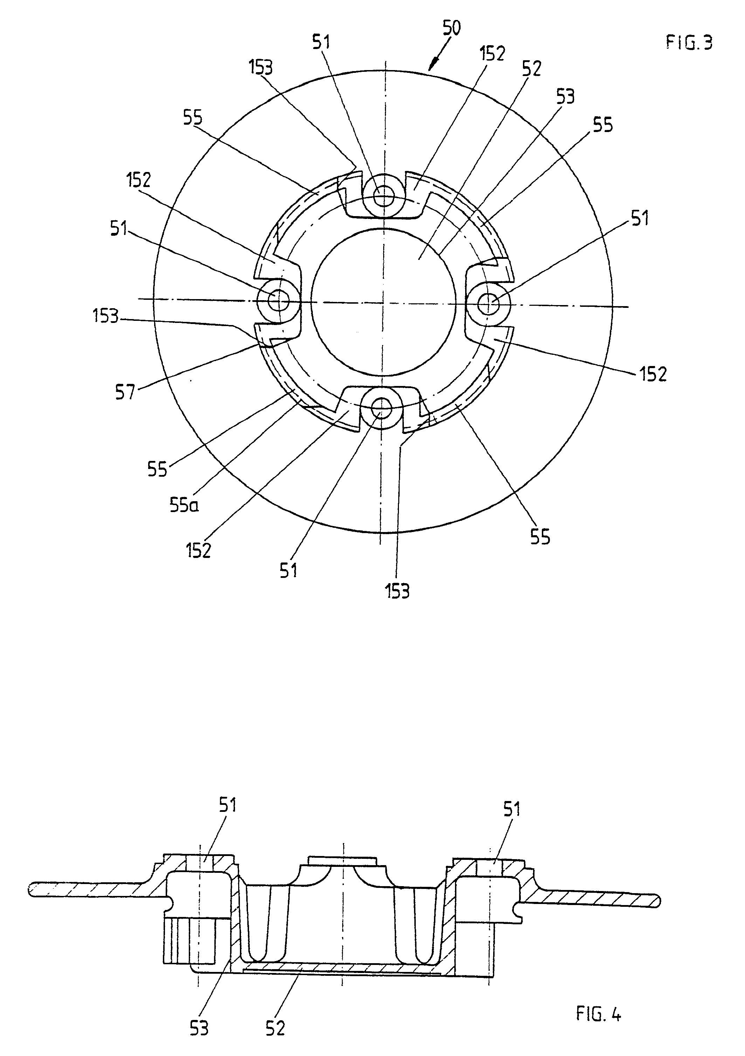

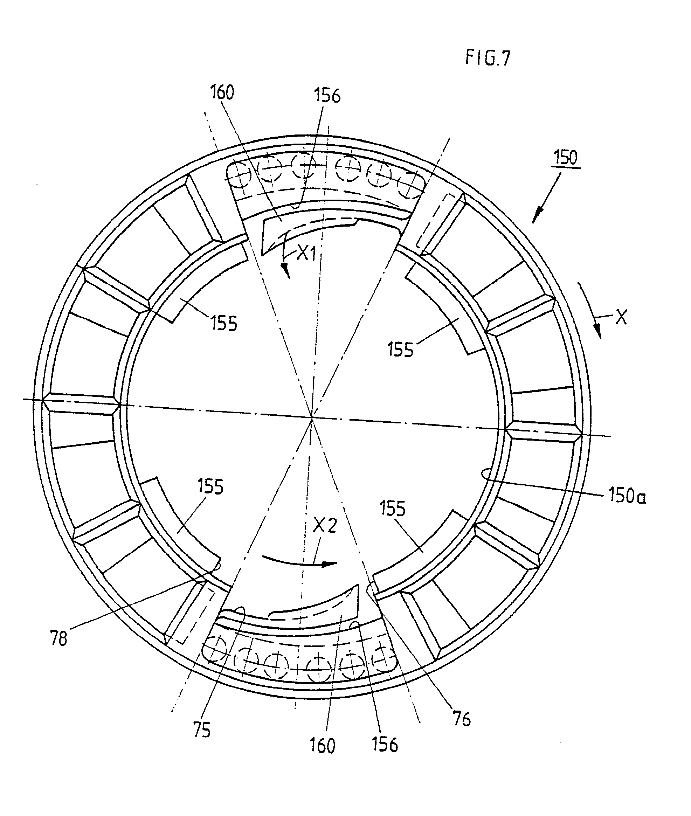

Die Befestigungseinrichtung für die Gleitschutzvorrichtung 10 an der Felge 11 eines Fahrzeugrades besteht aus einer Befestigungsscheibe 50 und einem Sicherungsring 150 (Fig. 3 und 7). Nach einer weiteren Ausführungsform der Erfindung ist die Befestigungsscheibe 50 integrierter Bestandteil des Fahrzeugrades. Rad und Befestigungsscheibe bilden dann ein Walz- oder Formstück.

Die Befestigungsscheibe 50 ist mit einer Anzahl von Durchbrechungen 51 versehen, die zum Hindurchführen der Felgenschrauben, Radbolzen od. dgl. 18 dienen. Wie Fig. 1 zeigt, sind die Felgenschrauben oder Radbolzen 18 zur Befestigung der Befestigungsscheibe 50 mit ein Innengewinde aufweisenden Bohrungen zur Aufnahme von Sicherungsschrauben 85 versehen, mittels der die Befestigungsscheibe 50 an der Radfelge 11 befestigbar ist.

Die kreisförmige Befestigungsscheibe 50 weist mittig eine im Querschnitt kreisförmige Nabe 52 auf, die als zylindrischer Formkörper ausgebildet und integrierter Bestandteil der Befestigungsscheibe 50 ist. Diese Nabe 52 weist einen Durchmesser auf, der gegenüber dem Durchmesser der Befestigungsscheibe 50 kleiner ist.

An ihrem Außenumfang, und zwar benachbart zum oberen umlaufenden Rand 53, weist die Nabe 52 eine Anzahl von wulstartigen Ansätzen 55 auf, die im gleichen Abstand voneinander angeordnet sind. Bei dem in Fig. 3 gezeigten Ausführungsbeispiel sind an der Nabe 52 der Befestigungsscheibe 50 vier aus dem Umfang der Nabe seitlich auskragende wulstartige Ansätze 55 vorgesehen.

Unterhalb eines jeden wulstartigen Ansatzes 55 ist eine Gleit- und Führungsbahn 60 ausgebildet. Diese Gleit- und Führungsbahn 60 ist als Ausnehmung ausgebildet und weist eine Einführöffnung 56 auf, von der sich die Gleit- und Führungsbahn 60 zum Endbereich konisch verjüngt, so daß die Einführungsöffnung 56 gegenüber dem Endbereich 56a größer bemessen ist. Die die Gleit- und Führungsbahn 60 bildende Ausnehmung ist hiernach keilförmig verlaufend und in dem zur Befestigungsscheibe 50 benachbarten Bereich durch eine Ringwulst 57 begrenzt. Der Endbereich 56a der Gleit- und Führungsbahn 60 weist ebenfalls eine Begrenzung in Form eines Anschlages auf, der jedoch nicht unbedingt vorhanden sein muß.

Die Ringwulst 57, die am Außenumfang der Nabe 52 angeformt ist, stellt gleichzeitig die obere Begrenzung für die auf die Nabe 52 der Befestigungsscheibe 50 aufgesetzte Tragscheibe 20 dar (Fig. 3). Im Bereich der Durchbrechungen 51 ist diese Ringwulst 57 unterbrochen, da ein Teilabschnitt einer jeden Durchbrechung 51 als Teilbohrung bis in die Nabe 52 geführt ist (Fig. 3).

Alle Gleit- und Führungsbahnen 60 unterhalb der wulstartigen Ansätze 55 sind so ausgebildet und angeordnet, daß ihre Einführöffnungen 56 dem jeweils vorangehenden Endbereich 56a zugekehrt sind.

Jeder wulstartige Ansatz 55 ist vorteilhafterweise in seinem oberen Bereich mit einer Abflachung 55a versehen, um das Aufsetzen des Sicherungsringes 150 zu erleichtern.

Die Nabe 52 der Befestigungsscheibe 50 dient zur Aufnahme der Tragscheibe 20 mit den Gleitschutzarmen 40 der Gleitschutzvorrichtung 10 und zur Aufnahme des Sicherungsringes 150.

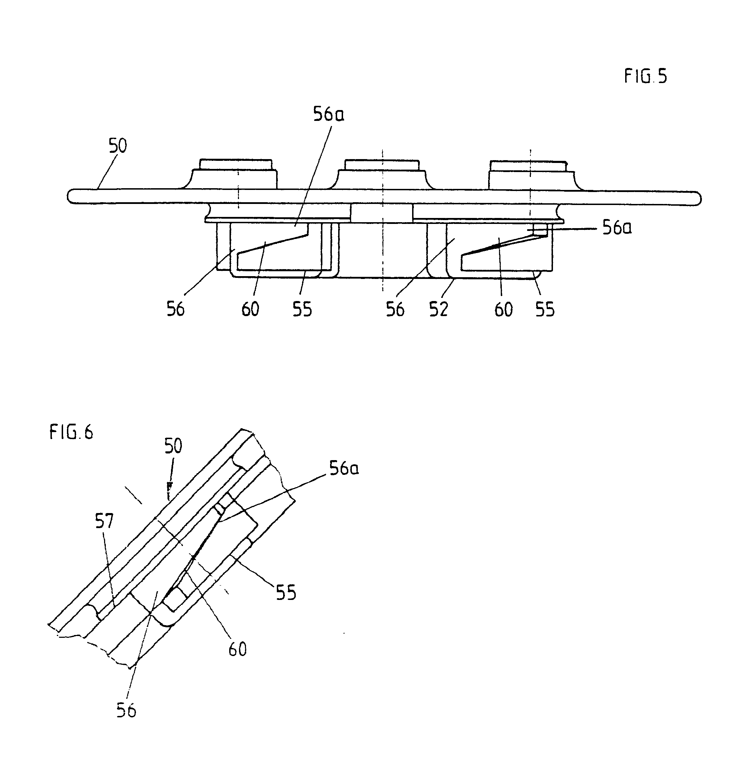

Die Sicherung der auf die Befestigungsscheibe 50 aufgesetzten Tragscheibe 20 der Gleitschutzvorrichtung 10 erfolgt mittels des Sicherungsringes 150. Dieser Sicherungsring 150 mit einem Außendurchmesser, der etwas geringer ist als der Durchmesser der Befestigungsscheibe 50 bzw. gleich dem Durchmesser dieser Befestigungsscheibe ist, weist an seiner Innenwandfläche 150a eine Anzahl von Verriegelungsstegen 155 auf, deren Anzahl der Anzahl der wulstartigen Ansätze 55 bzw. der Anzahl der Gleit- und Führungsbahnen 60 an der Nabe 52 der Befestigungsscheibe 50 entspricht. Diese Verriegelungsstege 155 sind so ausgebildet, daß sie in die Gleit- und Führungsbahnen 60 so einführbar sind, daß eine bajonettartige Verriegelung zwischen dem Sicherungsring 150 und der Nabe 52 bzw. der Befestigungsscheibe 50 erfolgt (Fig. 7). Die Verriegelungsstege 155 sind hiernach keilförmig ausgebildet, so daß bei auf die Befestigungsscheibe 50 aufgesetztem Sicherungsring 150 die konisch verjüngt auslaufenden Endabschnitte eines jeden Verriegelungssteges 155 der Einführöffnung 56 der die Gleit- und Führungsbahnen 60 bildenden Ausnehmung zwischen dem wulstartigen Ansatz 55 und der Ringwulst 57 zugekehrt ist, so daß bei einem Verdrehen des Sicherungsringes 150 um seine senkrechte Mittelachse in Pfeilrichtung X die Verriegelungsstege 155 in die Gleit- und Führungsbahnen 60 eingeführt werden und somit die bajonettverschlußartige Verriegelung erzielt wird (Fig. 6 und 7).

Um den Sicherungsring 150 auf die Nabe 52 der Befestigungsscheibe 50 so aufsetzen zu können, daß die Verriegelungsstege 155 des Sicherungsringes 150 in die Gleit- und Führungsbahnen 60 eingeführt werden können, weisen die Verriegelungsstege 155 eine Länge auf, die dem Abstand zwischen zwei wulstartigen Ansätzen 55 an der Befestigungsscheibe 50 entspricht. Auf diese Weise sind die Verriegelungsstege 155 in der Aufsetzstellung des Sicherungsringes 150 zwischen je zwei wulstartigen Ansätzen 55 hindurchführbar, bis der Sicherungsring 150 auf der Ringwulst 57 zu liegen kommt und die Verriegelungsstege 155 in die die Gleit- und Führungsbahnen 60 bildenden Ausnehmungen einführbar sind.

Um ein selbsttätiges Lösen des Sicherungsringes 150 von der Nabe 52 bzw. der Befestigungsscheibe 50 zu vermeiden, ist der Sicherungsring 150 mit zusätzlichen Arretierungseinrichtungen versehen. Diese Arretierungseinrichtungen sind als blattfederartige Schnäpper 160 ausgebildet, und zwar in Form von federnd-elastischen Zungen, die in Ausnehmungen 156 an der Innenwandfläche 150a des Sicherungsringes 150 angeordnet sind. Die Anordnung und Ausbildung dieser blattfederartigen Schnäpper 160 ist derart, daß bei auf die Nabe 52 der Befestigungsscheibe 50 aufgesetztem Sicherungsring 150, jedoch noch in unverriegelter Stellung, die blattfederartigen Schnäpper 160 von den wulstartigen Ansätzen 55 an der Nabe 52 in ihre Ausnehmungen 156 an der Innenwandfläche 150a des Sicherungsringes 150 gedrückt werden. Erfolgt die Verriegelung des Sicherungsringes 150, indem dieser verdreht wird, dann kommen die blattfederartigen Schnäpper 160 im Bereich von Ausnehmungen 152 zu liegen, die am Umfang der Nabe 52 ausgebildet sind. Da die blattfederartigen Schnäpper 160 das Bestreben haben, aus ihren Ausnehmungen 156 in Pfeilrichtung XI selbsttätig zu federn, kommen die blattfederartigen Schnäpper 160 in den Ausnehmungen 152 an der Nabe 52 zu liegen und bilden dort die Verriegelung insofern, als die freien Enden der blattfederartigen Schnäpper 160 an Anschlägen 153 zu liegen kommen, die die Ausnehmungen 152 in der Nabe 52 begrenzen. Die in diese Ausnehmungen mit den Anschlägen 153 eingreifenden freien Enden der blattfederartigen Schnäpper 160 verhindern somit, daß der Sicherungsring 150 entgegen seiner Drehrichtung zum Verriegeln sich löst und sich von der Nabe 52 abheben kann.

Die Anzahl der blattfederartigen Schnäpper 160 an der Innenwandfläche 150a des Sicherungsringes 150 kann beliebig gewählt sein. Bei dem in Fig. 7 gezeigten Ausführungsbeispiel sind zwei blattfederartige Schnäpper 160 vorgesehen, die im gleichen Abstand voneinander an der Innenwandfläche 150a des Sicherungsringes 150 vorgesehen sind. Die Anzahl der Ausnehmungen 152 im Umfang der Nabe 52 der Befestigungsscheibe 50 entspricht dabei der Anzahl der blattfederartigen Schnäpper 160.

Die blattfederartigen Schnäpper 160 sind bei der Herstellung des Sicherungsringes 150 gleichzeitig mit ausgeformt. Der Sicherungsring 150 besteht aus Kunststoffen mit einem federndelastischen Verhalten im Falle zungenförmiger Ausgestaltungen, wie dies auf die blattfederartigen Schnäpper 160 zutrifft.

Anstelle von blattfederartigen Schnäppern 160 können auch andersartig ausgebildete Verriegelungseinrichtungen zur Anwendung gelangen. So besteht beispielsweise die Möglichkeit, radial verschiebbare und federbeaufschlagte Bolzen zu verwenden, die in entsprechende Ausnehmungen am Umfang der Nabe 52 der Befestigungsscheibe 50 eingreifen, wobei jedoch dann entsprechende Vorkehrungen getroffen sein müssen, um ein Entriegeln insofern zu bewirken, als die Verriegelungsbolzen in ihre Ausgangsstellung zurückgezogen werden müssen, um den Sicherungsring 150 von der Befestigungsscheibe 50 abnehmen zu können.

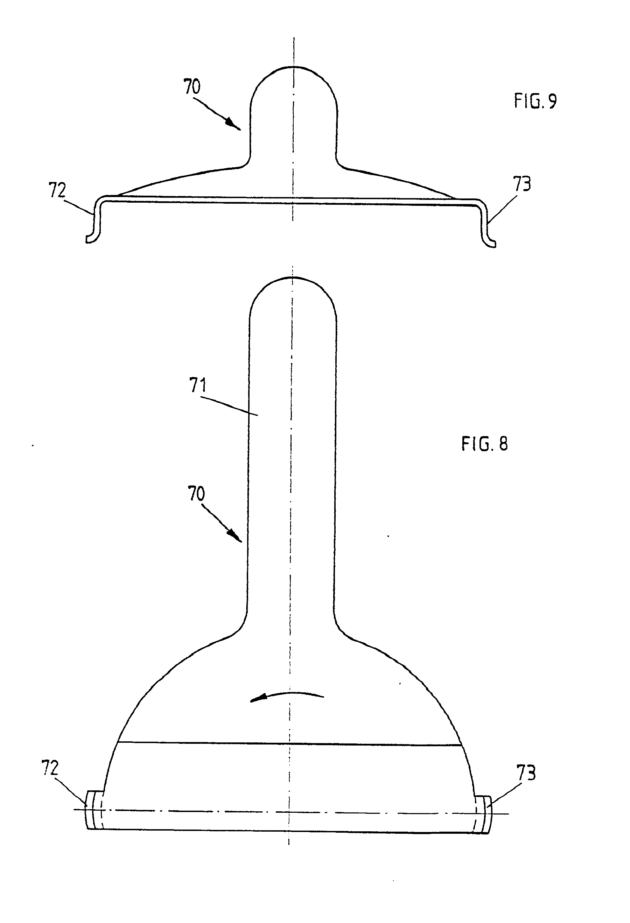

Um den Sicherungsring 150 von der Befestigungsscheibe 50 abnehmen zu können, ist es erforderlich, die blattfederartigen Schnäpper 160 aus ihrer Verriegelungsstellung in ihre Ausgangsstellung in den Ausnehmungen 156 an der Innenwandfläche 150a des Sicherungsringes 150 zu überführen. Hierfür ist der in Fig. 8 und 9 dargestellte Entriegelungsschlüssel 70 vorgesehen, der aus einer griffartigen Handhabe 71 besteht, die an ihrem einen freien Ende zwei in einem Abstand voneinander angeordnete Druckzungen 72, 73 trägt, die etwa senkrecht stehend zur griffartigen Handhabe 71 angeordnet sind. Der Abstant zwischen diesen beiden Druckzungen 72, 73 entspricht dem Abstand der sich gegenüberliegenden blattfederartigen Schnäpper 160, so daß die Druckzungen 52, 53 in die beiden Ausnehmungen 152 an der Nabe 52 einführbar sind. Hierfür weisen entsprechend Fig. 7 die beiden Ausnehmungen 152 an der Nabe 52 zusätzliche Ausnehmungen 75 auf, in die die beiden Druckzungen 52, 53 des Entriegelungsschlüssels 70 einführbar sind.

Sind die Druckzungen 72, 73 des Entriegelungsschlüssels 70 in diese Ausnehmungen 75 eingeführt und wird der Entriegelungsschlüssel 70 in Pfeilrichtung X2 (Fig. 7) verschwenkt, dann werden die beiden blattfederartigen Schnäpper 160, die in den Ausnehmungen 152 der Nabe 52 zu liegen kommen, aus diesen Ausnehmungen 152 herausgedrückt und in die Ausnehmungen 156 an der Innenwandfläche 150a des Sicherungsringes 150 bewegt. Dabei werden die blattfederartigen Schnäpper 160 soweit in ihre Ausnehmungen 156 eingeführt, daß im Endbereich der Bewegungsbahn der beiden Druckzungen 52, 53 ein Anschlag 76 freigegeben wird, an dem die beiden Druckzungen 72, 73 zur Anlage gebracht werden. Sind die Druckzungen 72, 73 an diesen Anschlägen 76 zur Anlage gebracht und wird der Entriegelungsschlüssel 70 weiter in Pfeilrichtung X2 verdreht, dann nehmen die Druckzungen 72, 73 den Sicherungsring 150 mit und führen bei weiterer Drehbewegung die Verriegelungsstege 155 aus den Gleit- und Führungsbahnen 60 der Befestigungsscheibe 50 heraus, bis die Verriegelungsstege 155 zwischen den wulstartigen Ansätzen 55 zu liegen kommen, so daß in dieser Stellung dann der Sicherungsring 150 von der Nabe 52 abgenommen werden kann.

Auch das Aufsetzen des Sicherungsringes 150 auf die Nabe 52 erfolgt mittels des Entriegelungsschlüssels 70 in der Weise, daß die Druckzungen 72, 73 des Entriegelungsschlüssels 70 in die Ausnehmungen 75 eingeführt werden und bei einem Verdrehen des Entriegelungsschlüssels 70 in Pfeilrichtung X (Fig. 7) nehmen die Druckzungen 72, 73 den Sicherungsring 150 solange mit, bis die Verriegelungsstege 155 in den Gleit- und Führungsbahnen 60 zu liegen kommen und der Bajonettverschluß hergestellt ist. Für das Mitnehmen des Sicherungsringes 150 durch die Druckzungen 72, 73 des Entriegelungsschlüssels 70 weisen die Ausnehmungen 75 im Befestigungsbereich der blattfederartigen Schnäpper 160 Anschläge 78 auf (Fig. 7).

Wie Fig. 1 zeigt, weist die Befestigungsscheibe 50 auf ihrer der Nabe 52 abgekehrten Wandfläche 50a im Bereich der Felgenschrauben- bzw. Radbolzen-Durchbrechungen 51 Abstandsringe 80 auf, die als austauschbarer Adapter ausgebildet sind. Dadurch ist die Möglichkeit gegeben, durch Abstandsringe 80 unterschiedlicher Größen die Befestigungseinrichtung unterschiedlichen Reifengrößen anpassen zu können.

Die Befestigung einer Gleitschutzvorrichtung 10, bestehend aus der Tragscheibe 20 mit den Gleitschutzarmen 40, an der Felge bzw. dem Rad 11 eines Fahrzeuges unter Verwendung der Befestigungseinrichtung, bestehend aus der Befestigungsscheibe 50 und dem Sicherungsring 150, erfolgt in der Weise, daß nach dem Befestigen der Befestigungsscheibe 50 mittels der Felgenschrauben, Radbolzen od. dgl. 18 an der Radfelge 11, die Tragscheibe der Gleitschutzvorrichtung 10 auf die Nabe 52 der Befestigungsscheibe 50 aufgesetzt wird. Hierauf wird dann der Sicherungsring 150 aufgesetzt, so daß seine Verriegelungstege 155 in den Zwischenräumen zwischen den wulstartigen Ansätzen 55 an der Nabe 52 zu liegen kommen. Es erfolgt dann das Einführen der Druckzungen 72, 73 des Entriegelungsschlüssels 70 in die Ausnehmungen 75 und anschließendes Verschwenken des Entriegelungsschlüssels 70 in Pfeilrichtung X (Fig. 7), wodurch der Sicherungsring 150 um seine senkrechte Mittelachse verschwenkt wird, bis die Verriegelungsstege 155 an der Innenwandfläche 150a des Sicherungsringes 150 in dem die Gleit- und Führungsbahnen 60 bildenden Ausnehmungen zu liegen kommen. Gleichzeitig rasten selbstfedernd die blattfederartigen Schnäpper 160 in die Ausnehmungen 152 an der Nabe 52, wodurch die Verriegelung gegen ein unbeabsichtigtes Lösen des Sicherungsringes 150 erfolgt. Dadurch, daß die freien Enden der blattfederartigen Schnäpper 160 in anschlagartigen Ausnehmungen 153 zu liegen kommen, ist eine sichere Verriegelung gewährleistet. Dadurch, daß diese Anschlagausnehmungen 153 hinterschnitten ausgebildet sind und die freien Ende der blattfederartigen Schnäpper 160 eine etwa keilförmige Ausgetaltung aufweisen, ist gewährleistet, daß die blattfederartigen Schnäpper 160 mit ihren freien Enden aus diesen Anschlagausnehmungen 153 nicht herausfedern können.

Auf diese Weise ist die Gleitschutzvorrichtung 10 mittels der Befestigungseinrichtung aus der Befestigungsscheibe 50 und dem Sicherungsring 150 an der Felge 11 des Fahrzeugrades so gehalten, daß die Gleitschutzarme 40 der Gleitschutzvorrichtung 10 die Reifenlauffläche übergreifen.

Das Abnehmen der Gleitschutzvorrichtung 10 erfolgt unter Zuhilfenahme des Entriegelungsschlüssels 70, der wiederum in die Ausnehmungen 75 mit seinen Druckzungen 72, 73 eingeführt wird. Durch Verschwenken des Entriegelungsschlüssels 70 werden die blattfederartigen Schnäpper 160 aus ihrer Verriegelungsstellung in ihre Ausgangsstellung in den Ausnehmungen 156 an der Innenwandfläche 150a des Sicherungsringes 150 bewegt. Gleichzeitig erfolgt ein Verdrehen des Sicherungsringes 150 soweit, bis die Verriegelungsstege 155 des Sicherungsringes 150 aus den Gleit- und Führungsbahnen 60 an der Nabe 52 herausgeführt sind. Der Sicherungsring 150 kann dann abgehoben werden. Es erfolgt dann ein Abziehen der Tragscheibe 20 der Gleitschutzvorrichtung 10 von der Nabe 52 der Befestigungsscheibe 50. Bei weiterem Nichtgebrauch der Gleitschutzvorrichtung 10, jedoch bei einer Bereithaltung der Befestigungseinrichtung wird lediglich auf die Befestigungsscheibe 50 der Sicherungsring 150 aufgesetzt und verriegelt, so daß jederzeit die Möglichkeit besteht, die Gleitschutzvorrichtung 10 anzubringen, falls dies erforderlich werden sollte.

Die Tragscheibe 20 der Gleitschutzvorrichtung 10 ist mit einer mittigen Durchbrechung versehen, damit die Tragscheibe 20 auf die Nabe 52 der Befestigungsscheibe 50 aufsetzbar ist. Der Durchmesser dieser mittigen Durchbrechung ist jedoch größer als der Durchmesser der Nabe 52, so daß die auf der Nabe 52 gehaltene Tragscheibe 20 der Gleitschutzvorrichtung 10 exzentrische Bewegungen durchführen kann. Auf diese Weise ist es möglich, daß die die Reifenlauffläche umgreifenden Gleitschutzarme 40 in Verbindung mit der Tragscheibe 20 den Walkbewegungen des abrollenden Reifens sich anpassen können. Außerdem ist der Durchmesser der mittigen Durchbrechung in der Tragscheibe 20 so bemessen, daß die Tragscheibe 20 über die Ringwulst 57 an der Nabe 52 führbar ist. Die Absicherung der Tragscheibe 20 nach oben erfolgt mittels des die Tragscheibe abschnittsweise übergreifenden Sicherungsringes 150, während die Sicherung zur Felge hin durch die Begrenzungsscheibe 50 selbst erfolgt.

**Patentansprüche**

1. Gleitschutzvorrichtung, insbesondere für luftbereite Fahrzeugräder auf Eis- und Schneeflächen, die aus einer an der Radscheibe bzw. Felge (11) befestigbaren Tragscheibe (20) mit einer Anzahl von in gleichem Abstand voneinander radial verlaufenden Gleitschutzarmen (40) aus einem vorgebogenen, die Reifenlauffläche übergreifenden und außenseitig an ihren freien Enden ein Greifprofil oder Spikes tragenden Profil aus einem Kunststoff oder einem anderen geeigneten Werkstoff besteht, wobei die Gleitschutzarme (40) an einer mit einer mittigen Durchbrechung versehenen Tragscheibe (20) um parallel zur Radscheibenlagerachse verlaufende Achsen (41) in einem kleinen Bereich verschwenkbar angeordnet sind und zur Befestigung der Tragscheibe (20) an der Radscheibe bzw. Felge (11) eine kreisförmige Befestigungsscheibe (50) mit einer Anzahl von Durchbrechungen (51) für die Felgenschrauben, Radbolzen od. dgl. (18) vorgesehen ist, dadurch gekennzeichnet, daß

a) die Befestigungsscheibe (50) mit Schrauben (85, 18) an der Felge befestigt ist,

b) die Befestigungsscheibe (50) zentrisch eine kreisförmige, gegenüber dem Durchmesser der Befestigungsscheibe (50) einen kleineren Durchmesser aufweisende Nabe (52) trägt, die in einem Abstand von der Befestigungsscheibe (50) benachbart zu ihrem oberen Rand (53) an ihrem Umfang eine Anzahl von wulstartigen Ansätzen (50) mit unterhalb diesen ausgebildeten, sich konisch von Einführöffnungen (56) verjüngenden in Nabenumfangrichtung verlaufenden Gleit- und Führungsbahnen (60) aufweist und die die die Nabe (52) umschließende Tragscheibe (20) mit den Gleitschutzarmen (40) trägt, die mittels eines auf die Nabe (52) aufgesetzten Sicherungsringes (150) gesichert ist, der in die Gleit- und Führungsbahnen (60) an der Nabe (52) einführbare, eine bajonettartige Verriegelung bewirkende Verriegelungsstege (155) mit sich zu den Einführöffnungen (56) hin erstreckenden, konisch sich verjüngenden Abschnitten und an seiner Innenwandfläche (150a) mindestens einen blattfederartigen Schnäpper (160) aufweist, der in verriegelter Stellung des Sicherungsringes (150) an der Befestigungsscheibe (50) in eine Ausnehmung (152) am Umfang der Nabe (52) eingreift und sich an einem Anschlag (153) gegen ungewolltes Entriegeln abstützt und mittels eines Entriegelungsschlüssels (70) aus der Verriegelungsstellung in eine Entriegelungsstellung überführbar ist,

c) die Tragscheibe (20) mit den Gleitschutzarmen (40) mit Spiel auf der Nabe (52) der Befestigungsscheibe (50) zur Durchführung exzentrischer Umlaufbewegungen angeordnet ist.

2. Gleitschutzvorrichtung nach Anspruch 1, dadurch gekennzeichnet, daß an dem Umfang der Nabe (52) der Befestigungsscheibe (50) vier in gliechem Abstand voneinander angeformte, wulstartige Ansätze (55) mit Einführöffnungen (56) vorgesehen sind, und daß an der Innenwandfläche (150a) des Sicherungsringes (150) eine der Anzahl der wulstartigen Ansätze (55) entsprechende Anzahl von in gleichem Abstand voneinander angeordneten Verriegelungsstegen (155) angeformt ist.

3. Gleitschutzvorrichtung nach Anspruch 1 und 2, dadurch gekennzeichnet, daß der Sicherungsring (150) an seiner Innenwandfläche (150a) zwei in gleichem Abstand voneinander angeordnete blattfederartige Schnäpper (160) aufweist, die in der Verriegelungsstellung selbsttätig in eine der Anzahl der Schnäpper (160) entsprechende Anzahl von Ausnehmungen (152) einschwenkbar und bei äußerer Druckeinwirkung in Ausnehmungen (156) in der Innenwandfläche (150a) des Sicherungsringes (150) zur Entriegelung rückführbar sind.

4. Gleitschutzvorrichtung nach Anspruch 1 bis 3, dadurch gekennzeichnet, daß der Entriegelungsschlüssel (70) zum Entriegeln der blattfederartigen Schnäpper (160) aus einer griffartigen handhabe (71) besteht, die an ihrem einen freien Ende zwei in einem Abstand voneinander angeordnete Druckzungen (72, 73) trägt, die senkrecht stehend zur griffartigen Handhabe (71) angeordnet sind und deren Abstand voneinander dem Abstand der sich gegenüberliegenden blattfederartigen Schnäpper (160) entspricht.

5. Gleitschutzvorrichtung nach Anspruch 1 bis 4, dadurch gekennzeichnet, daß die Befestigungsscheibe (50) auf ihrer der Nabe (52) abgekehrten Wandfläche (50a) im Bereich der Felgenschrauben- bzw. Radbolzen Durchbrechungen (51) als Abstandsringe (80) ausgebildete, austauschbare Adapter aufweist.

6. Gleitschutzvorrichtung nach Anspruch 1 bis 5, dadurch gekennzeichnet, daß die Felgenschrauben bzw. Radbolzen (18) zur Befestigung der Befestigungsscheibe (50) Bohrungen mit Innengewinde zur Aufnahme von Sicherungsschrauben (85) aufweisen.

7. Gleitschutzvorrichtung nach Anspruch 1 bis 6, dadurch gekennzeichnet, daß die Länge eines Verriegelungssteges (155) des Sicherungsringes (150) etwa dem Abstand zwischen zwei wulstartigen Ansätzen (55) an der Nabe (52) der Befestigungsscheibe (50) entspricht.

8. Gleitschutzvorrichtung nach Anspruch 1 bis 7, dadurch gekennzeichnet, daß die Gleitschutzvorrichtung zur Befestigung der Tragscheibe (20) eine mit der Radscheibe bzw. Felge (11) verbundene Befestigungsscheibe (10) aufweist, die mit verriegelbaren Halterungen für die Tragscheibe (20) verbunden ist, und daß die Befestigungsscheibe (50) unlösbar mit der Radscheibe bzw. Felge (11) verbunden ist und einen Bestandteil des Rades bildet.

**Claims**

1. Anti-skid device, especially for vehicle tyres on surfaces covered with ice and snow comprising a supporting disc (20) fixable to a wheel disc resp. to a rim (11) with a number of radially arranged anti-skid arms (40) at an equal distance from each other out of a prebent profile overlapping the tread of the wheel and supporting a gripping profile or spikes on the exterior at the free ends out of plastic or any other suitable material, the anti-skid arms (40) being arranged at a supporting disc (20) provided with a center opening around axles (41) running parallely to the axle of the wheel-disc bearing and swinging in a small range, and, for the attachment of the supporting disc (20) to the wheel disc or the rim (11), a circular attachment disc (50) is provided with a number of openings (51) for the rim screws, wheel bolts or similar (18), characterized in that

a) the attachment disc (50) is fixed to the rim by means of screws (85, 18),

b) the attachment disc (50) centrically presents a circular hub (52) which is smaller in diameter than the attachment disc (50), the hub (52) presenting a number of bulging joins (50) at a distance from the attachment disc (50) adjacent to its superior edge (53) at its circumference with sliding and guiding rails (60) arranged there under and conically reducing from the entering openings (56) in the direction of the hub's circumference and supporting the supporting disc (20) with the anti-skid arms (40) surrounding the hub (52), these arms being secured by means of a retaining ring (150) set on the hub (52) which presents lock bars (155) which can be entered into the sliding and guiding rails (60) at the hub (52) and resulting in a bayonet-like lock, the bars having sections reaching towards the entering openings (56) and conically reducing and presenting at least one leaf-spring like spring-loaded clatch (160) at the inner wall surface (150a), this clatch with the locked position of the retaining rings (150) at the attachment disc (50) reaching into a recess (152) at the circumference of the hub (52) and supporting at a limit stop (153) to prevent unintentional release and, by means of a release key (70), and allowing a change from its locking position into a release position,

c) the supporting disc (20) with anti-skid arms (40) is arranged with a free play on the hub (52) of the attachment disc (50) to allow the execution of excentric rotating movements.

2. Anti-skid device according to claim 1, characterized in that four moulded bulging joins (55) are provided at the circumference of the hub (52) of the attachment disc (50) which are at an equal distance from each other, and that there is a number of lock bars (155) moulded at an equal distance from each other corresponding to the number of bulging joins (55).

3. Anti-skid device according to claims 1 and 2, characterized in that the retaining ring (150) has two spring-loaded leaf-spring like clatches (160) at its inner wall surface (150a) at an equal distance from each other, which in their lock position, are automatically swinging into a number of recesses (152) corresponding to the number of spring-loaded clatches (160) and can be led back for release upon external influence of pressure in the recesses (156) in the inner wall surface (150a) of the retaining ring (150).

4. Anti-skid device according to claims 1 to 3, characterized in that the release key (70) for the release of the leaf-spring like spring-loaded clatches (160) comprises a handle-like purchase (71) provided with two pressure tongues (72, 73) at its one free end at a distance from each other, which are arranged in a vertical position to the handle-like purchase (71) and the distances of which from each other corresponding to the distance of the opposed leaf-spring like spring-loaded clatches (160).

5. Anti-skid device according to claims 1 to 4, characterized in that the attachment disc (50) has interchangeable adapters as distance rings (80) on its inner wall surface (50a) away from the hub (52) in the area of the rim-screw-resp. of the wheel-bolt-openings.

6. Anti-skid device according to claims 1 to 5, characterized in that the rim screws resp. the wheel bolts (18) have bore holes with internal screw threads for the reception of the retaining screws (85) to fix the attachment disc (50).

7. Anti-skid device according to claims 1 to 6, characterized in that the length of one lock bar (155) of the retaining ring (150) roughly corresponds to the distance between two bulging joins (55) on the hub (52) of the attachment disc (50).

8. Anti-skid device according to claims 1 to 7, characterized in that the anti-skid device for the attachment of the supporting disc (20) has an attachment disc (10) connected with the wheel disc resp. with the rim (11) which is connected with lockable holding devices for the supporting disc (20) and that the attachment disc (50) is inseparable connected with the wheel disc resp. with the rim (11) and forming a component of the tyre.

**Revendications**

1. Dispositif antidérapant, notamment pour pneumatiques de véhicules automobiles sur des surfaces enneigées et verglassées, constitué par un disque de support (20) pouvant être fixé au disque de roue ou à la jante (11) qui présente un certain nombre de bras antidérapants (40) placés dans le sens radial, à égale distance les uns des autres et constitués par un profil précambré, recouvrant la chape du pneu et portant aux extrémités libres de sa face extérieure un profil de prise ou des crampons antidérapants en matière plastique ou en un autre matériau adéquat, les bras antidérapants (40) disposés sur un disque de support (20) pourvu d'une découpure centrale étant placés de manière à pivoter dans une petite zone autour d'axes (41) situés dans le sens parallèle à l'axe du palier du disque de roue, et un disque de fixation circulaire (50) présentant un certain nombre de découpures (51) pour les vis de jante, boulons de fixation de roue ou équivalent (18) étant prévu pour la fixation du disque de support (20) sur le disque de roue ou la jante (11), caractérisé en ce que

a) le disque de fixation (50) est fixé sur la jante par des vis (85, 18),

b) le disque de fixation (50) qu'il porte en son centre un moyeu (52) circulaire d'un diamètre inférieur à celui du disque de fixation (50), moyeu présentant sur sa périphérie de manière espacée par rapport au disque de fixation (50) et à proximité de son bord supérieur (53) un certain nombre de saillies en bourrelets (55) avec des glissières ou guides (60) formées en-dessous de ces saillies, coniques à partir d'orifices d'entrée (56) en direction de la périphérie du moyeu, disque de fixation portant le disque de support (20) entourant le moyeu (52) avec les bras antidérapants (40), disque de support qui est bloqué à l'aide d'un circlip (150) fixé sur le moyeu (52) présentant des tiges de verrouillage (155) avec des sections coniques dans le sens des orifices d'entrée (56) pouvant être introduites dans les glissières et guides (60) situés sur le moyeu (52) pour provoquer un verrouillage à baïonnette et présentant sur sa paroi intérieure (150a) au moins un pêne du type ressort à lame (160) qui s'engrène, lorsque le circlip (150) est en position verrouillée sur le disque de fixation (50) dans un creux (152) à la périphérie du moyeu (52), qui s'appuie contre une butée (153) pour pallier un déverrouillage non désiré et que l'on peut faire passer de la position de verrouillage à une position de déverrouillage au moyen d'une clé de déverrouillage (70),

c) que le disque de support (20) avec les bras antidérapants (40) est placé de manière à avoir du jeu sur le moyeu (52) du disque de fixation (50) pour pouvoir effectuer des mouvements circulaires excentriques.

2. Dispositif antidérapant selon la revendication 1, caractérisé en ce que quatre saillies en bourrelets (55), moulées, avec des orifices d'entrée (56) sont prévues à égale distance les unes des autres sur la périphérie du moyeu (52) du disque de fixation (50) et qu'un certain nombre de tiges de verrouillage (155), correspondant au nombre des saillies en bourrelets (55), moulées et situées à égale distance les unes des autres est prévu sur la paroi intérieure (150a) du circlip (150).

3. Dispositif antidérapant selon les revendications 1 et 2, caractérisé en ce que le circlip (150) présente sur sa paroi intérieure (150a) deux pênes du type ressort à lame (160) situés à égale distance l'un de l'autre que l'on peut faire pivoter automatiquement, dans la position de verrouillage, dans un certain nombre de creux (152) correspondant au nombre de pênes (160) et que l'on peut faire revenir dans les creux (156) de la paroi intérieure (150a) du circlip (150) à la position de déverrouillage par un effet de pression extérieur.

4. Dispositif antidérapant selon les revendications 1 à 3, caractérisé en ce que la clé de déverrouillage (70) pour débloquer les pênes du type ressort à lame (160) est constituée par un manche du type poignée (71) qui porte à son extrémité libre deux languettes de pression (72, 73) espacées l'une de l'autre qui sont disposées dans le sens vertical par rapport au manche de type poignée (71) et dont l'écartement correspond à l'écartement des pênes du type ressort à lame (160) qui sont situés l'un en face de l'autre.

5. Dispositif antidérapant selon les revendications 1 à 4, caractérisé en ce que le disque de fixation (50) présente sur sa paroi (50a) détournée du moyeu (52) et dans la zone des forures des vis de jante et ou boulons de fixation des adaptateurs interchangeables formés comme des bagues d'espacement (80).

6. Dispositif antidérapant selon les revendications 1 à 5, caractérisé en ce que les vis de jante ou boulons de fixation de roue (18) pour la fixation du disque de fixation (50) présentent des forures avec filet intérieur pour loger les vis de fixation.

7. Dispositif antidérapant selon les revendications 1 à 6, caractérisé en ce que la longueur d'une tige de verrouillage (155) du circlip (150) correspond approximativement à l'écartement entre deux saillies en bourrelets (55) sur le moyeu (52) du disque de fixation (50).

8. Dispositif antidérapant selon les revendications 1 à 7, caractérisé en ce que le dispositif antidérapant présente pour la fixation du disque de support (20) un disque de fixation (10) relié au disque de roue ou à la jante (11), disque qui est relié par des fixations pouvant être verrouillées pour le disque de support (20) et que le disque de fixation (50) est relié de manière indissociable au disque de roue ou à la jante (11) et qu'il est un élément de la roue.

**0 134 309**

FIG 1

FIG. 2

FIG.3

FIG.4

3

FIG.5

56a

50

56a

56  60  55  56  52  60  55

FIG.6

50

56a

57

55

60

56

4

FIG.7

FIG. 9

FIG. 8